# FASCICULE DE BREVET EUROPEEN

(11) **EP 2 368 755 B1**
(45) Date de publication et mention de la délivrance du brevet: **12.08.2015**
(21) Numéro de dépôt: 11158352.2
(22) Date de dépôt: 15.03.2011
(51) Int. Cl.: B60N 2/48, B60N 2/28

(54) **Siège auto pour enfant, pouvant prendre une position face à la route et une position dos à la route.**
Autokindersitz, verstellbar zwischen einer Einbauposition mit dem Gesicht zur Fahrtrichtung und mit dem Rücken zur Fahrtrichtung
Children's car seat which can assume a position facing the road and a position with the back to the road.

(30) Priorité: 15.03.2010 FR 1051839; 13.04.2010 FR 1052820
(43) Date de publication de la demande: 28.09.2011
(73) Titulaire: Dorel France SA, 49309 Cholet Cedex (FR)
(72) Inventeur: Retailleau, Gérard, 49300, CHOLET (FR); Gautrat, Frédéric, 49300, CHOLET (FR)
(74) Mandataire: Vidon Brevets & Stratégie

(56) Documents cités:
- EP-A2- 0 197 910
- WO-A1-2010/023230
- DE-A1- 19 636 013
- FR-A1- 2 715 357
- US-A- 4 913 490

## Description

### 1. Domaine de l'invention

Le domaine de l'invention est celui de la puériculture. Plus précisément, l'invention concerne les sièges auto pour enfant, destinés à être installés notamment sur les sièges de véhicules automobiles, pouvant prendre au moins deux positions, une position « dos à la route » et une position « face à la route ».

### 2. Art antérieur

On connaît de nombreux types de sièges auto pour enfants, ou sièges auto, qui sont adaptés aux différents âges de l'enfant.

Parmi ces sièges auto, on connaît notamment des sièges auto dits « groupe 0+ », qui sont adaptés et homologués pour les enfants depuis leur naissance jusqu'à ce qu'ils pèsent environ 13 kilos. Ces sièges auto sont prévus pour être installés dans une position « dos à la route », le bébé faisant face à la direction opposée à la direction d'avancement du véhicule. Ils permettent l'installation de l'enfant dans une position semi-assise (ou semi-allongée), dans laquelle celui-ci est suffisamment incliné pour que le poids de sa tête ne soit pas supporté intégralement par son cou et son dos. En effet, le dos et le cou des enfants de cet âge ne sont pas encore assez robustes pour supporter sur une longue durée le poids de la tête.

On connaît également des sièges auto dits « groupe 1 », qui sont adaptés et homologués pour les enfants pesant entre 9 et 18 kilos. Les enfants sont alors installés dans ces sièges auto en position assise et « face à la route », faisant face à la direction d'avancement du véhicule.

Certains sièges auto peuvent être utilisés comme des « groupe 0 + » ou des « groupe 1 » selon la position dans laquelle ils sont installés, voir WO 2010/023230 A1 qui est considéré comme l'état de la technique le plus proche. De tels sièges auto peuvent ainsi être installés dans une position face à la route telle que l'enfant puisse être assis (utilisation en « groupe 1 ») et dans une position dos à la route, telle que le bébé puisse être semi assis (utilisation en « groupe 0+ »).

Ces sièges auto peuvent mettre en oeuvre un système pivotant, le fauteuil pouvant pivoter par rapport à l'embase, qui reste fixe sur le siège du véhicule. Ces systèmes sont relativement complexes à mettre en oeuvre, en pratique, et donc coûteux.

Par ailleurs, ces sièges auto supposent des moyens spécifiques pour maintenir le siège sur l'embase de façon sûre, dans les deux positions.

### 3. Objectifs de l'invention

L'invention a notamment pour objectif de pallier ces inconvénients de l'art antérieur.

Plus précisément, un objectif de l'invention est de fournir un siège auto pouvant être utilisé, au choix, en configuration homologuée « groupe 1 », face à la route, ou en configuration homologuée « groupe 0+ », dos à la route, et qui soit simple, peu coûteux à fabriquer et à mettre en oeuvre et sûr.

### 4. Résumé de l'invention

Ces objectifs ainsi que d'autres qui apparaîtront par la suite sont atteints à l'aide d'un siège auto pour enfant, comprenant :
- une embase, apte à être solidarisée au siège d'un véhicule dans une position d'installation unique, et
- un fauteuil, comprenant une assise et un dossier, et pouvant prendre au moins deux positions par rapport à ladite embase, une position face à la route et une position dos à la route.

Selon l'invention, ladite embase présente au moins quatre premiers éléments de fixation, comprenant une première paire et une seconde paire de premiers éléments de fixation, aptes à coopérer avec au moins quatre seconds éléments complémentaires prévus sous l'assise dudit fauteuil, comprenant une première paire et une seconde paire de seconds éléments de fixation, lesdits premiers et seconds éléments de fixation étant distribués symétriquement de façon que :
- dans ladite position face à la route, la première paire de premiers éléments de fixation coopère avec la première paire de seconds éléments de fixation, et la seconde paire de premiers éléments de fixation coopère avec la seconde paire de seconds éléments de fixation ;
- dans ladite position dos à la route, la première paire de premiers éléments de fixation coopère avec la seconde paire de seconds éléments de fixation, et la seconde paire de premiers éléments de fixation coopère avec la première paire de seconds éléments de fixation,
et ladite embase présentant une section biseautée, comprenant une face arrière, prévue pour venir en contact avec le dossier du siège du véhicule et définissant un plan d'appui, et une face avant, la surface de ladite face arrière étant supérieure à la surface de ladite face avant,ledit dossier du siège auto s'étendant dans le prolongement dudit plan d'appui, lorsque ledit siège auto est dans la position face à la route, et l'extrémité de ladite assise venant dans ledit plan d'appui, lorsque ledit siège auto est dans la position dos à la route.

Ainsi, il est possible, de façon simple et efficace, de passer d'une position dos à la route à une position face à la route, et inversement.

La forme particulière de l'embase, biseautée, permet de fournir une surface de réception du fauteuil sensiblement plane, et le cas échéant d'améliorer la sécurité.

Dans ce but, ladite face arrière peut par exemple présenter une hauteur supérieure à 10 cm, assurant au moins en partie une fonction anti-rebond, notamment lorsque ledit siège auto est dans la position dos à la route.

Selon un mode de réalisation particulier de l'invention, lesdits premiers éléments de fixation sont des éléments mâles mobiles, et lesdits seconds éléments de fixation présentent des ouvertures, avec lesquelles lesdits éléments mâles peuvent coopérer selon deux sens d'introduction, correspondant respectivement à la position face à la route et à la position dos à la route.

Ceci permet une solidarisation efficace, dans les deux positions, par exemple avec un même mécanisme pour contrôler les éléments mâles mobiles.

Selon un mode de réalisation particulier, ladite embase comprend un élément central de guidage et/ou d'aide au placement dudit fauteuil dans l'une ou l'autre desdites positions dos à la route ou face à la route.

Ceci permet une manoeuvre aisée, évitant notamment des tâtonnements pour placer correctement le fauteuil par rapport à l'embase, dans l'une ou l'autre des positions dos à la route ou face à la route.

Dans ce cas, on peut prévoir que ledit fauteuil peut se déplacer sur une hauteur prédéterminée selon l'axe dudit élément central, pour passer d'une position basse de verrouillage à une position haute de rotation du fauteuil, pour passer de l'une à l'autre desdites positions dos à la route ou face à la route.

Ceci permet d'empêcher la désolidarisation du fauteuil et de l'embase, et de simplifier encore les manipulations.

Selon un autre aspect particulier de l'invention, le siège peut comprendre des moyens uniques d'actionnement desdits éléments de fixation, par exemple sous la forme d'une poignée contrôlant le déplacement en coulissement de l'ensemble desdits premiers éléments de fixation.

Dans ce cas, ladite poignée peut par exemple coopérer avec des premiers moyens de maintien dans une position de libération desdits premiers éléments de fixation, lorsque ladite poignée est dans une position de déverrouillage et que ledit fauteuil est en place sur ladite embase.

Ces premiers moyens assurent une première fonction de mémoire, dite par la suite « pré-mémoire ».

Par ailleurs, ladite poignée peut coopérer avec des seconds moyens de maintien dans une position de libération desdits premiers éléments de fixation, lorsque ladite poignée est dans une position de déverrouillage et que ledit fauteuil est éloigné de ladite embase.

Ces moyens assurent une seconde fonction de mémoire.

L'invention concerne également les embases pour sièges auto pour enfant, mettant en oeuvre des moyens de fixation tels que décrits ci-dessus.

### 5. Liste des figures

D'autres caractéristiques et avantages de l'invention apparaîtront plus clairement à la lecture de la description suivante d'un mode de réalisation, donné à titre de simple exemple illustratif et non limitatif, et des dessins annexés, parmi lesquels :
- les figures 1a et 1b illustrent schématiquement un siège auto selon l'invention, respectivement dans les positions face à la route et dos à la route ;
- la figure 2 représente schématiquement et en perspective un exemple d'embase selon l'invention ;
- la figure 3 représente schématiquement et en perspective l'embase de la figure 2, en train de recevoir le fauteuil correspondant (dont seule une portion de la structure est représentée, afin de bien distinguer les éléments d'accrochage), dans la position dos à la route ;
- les figures 4a et 4b représentent schématiquement l'intérieur de la partie supérieure de l'embase de la figure 3 (dont la partie inférieure a été retirée), respectivement lorsque la poignée est dans la position verrouillée et dans la position déverrouillée ;
- la figure 5 est une vue partielle, schématique agrandie de la zone 42 entourée d'un cercle sur la figure 4b, dans une autre position ;
- les figures 6a à 6c sont des vues simplifiées, schématiques et partielles, en coupe, de l'embase des figures 4a et 4b, et d'une portion inférieure du fauteuil, illustrant le fonctionnement des moyens de maintien en position de libération, également appelés clips de mémoire et clips de pré-mémoire.

### 6. Description d'un mode de réalisation de l'invention

### 6.1. Principe de l'invention

L'invention propose un nouveau type de siège auto pour enfant, pouvant prendre une position dos à la route et une position face à la route, en fonction des besoins, qui est particulièrement simple et efficace à mettre en oeuvre.

En effet, on prévoit, selon l'invention, au moins quatre ensembles de fixation, ou de verrouillage, sur l'embase et sur le fauteuil respectivement. Chaque ensemble de fixation comprend un premier élément de fixation solidaire de l'embase et un second élément de fixation complémentaire solidaire du fauteuil, et plus précisément de la face inférieure de son assise.

Dans le mode de réalisation décrit ci-après, les premiers éléments de fixation de l'embase sont des éléments mâles, également appelés doigts, formant pênes, et mobiles dans un plan sensiblement horizontal. Les seconds éléments de fixation solidaires de l'assise sont donc, dans ce cas, des éléments femelles, également appelés logements, formant gâches, et adaptés pour qu'ils puissent coopérer avec les éléments mâles dans les deux positions du fauteuil.

Pour cela, les logements présentent une lumière que les doigts peuvent traverser dans les deux sens (on pourrait également prévoir des trous borgnes symétriques). D'autres moyens de fixation réversibles, ou de verrouillage, peuvent bien sûr être mis en oeuvre. En particulier, il est possible d'inverser les éléments femelles et mâles.

Les éléments mâles sont au minimum au nombre de quatre, de même que les éléments femelles. Ils sont distribués en au moins deux paires, une première paire proche de la partie arrière de l'embase et une seconde paire proche de la partie avant de l'embase. De même, les éléments femelles sont distribués en au moins deux paires, une première paire proche du dossier et une seconde paire proche de l'extrémité de l'assise opposée au dossier.

Selon la position du fauteuil, les paires d'éléments mâles coopèrent avec des paires différentes d'éléments femelles :
- dans la position face à la route, la première paire d'éléments femelles reçoit la première paire d'éléments mâles, et la seconde paire d'éléments femelles reçoit la seconde paire d'éléments mâles ;
- dans la position dos à la route, la première paire d'éléments femelles reçoit la seconde paire d'éléments mâles, et la seconde paire d'éléments femelles reçoit la première paire d'éléments mâles.

Les paires d'éléments mâles et femelles sont donc conçues et distribuées symétriquement, pour être utilisées indifféremment dans l'une ou l'autre des positions.

### 6.2. Mode de réalisation

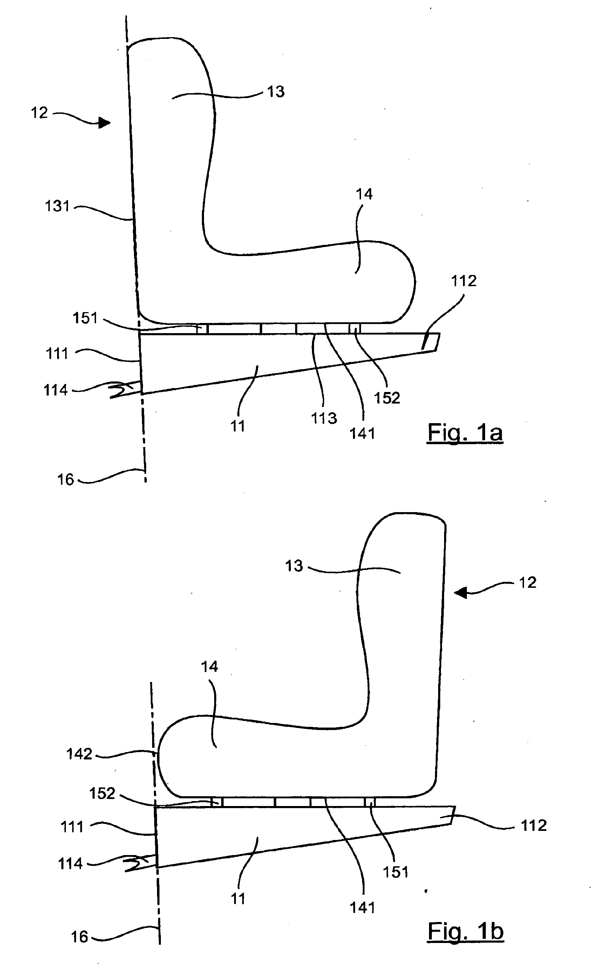

Comme on le voit sur l'exemple simplifié des figures 1a et 1b, l'embase 11 présente, dans le mode de réalisation illustré, une section biseautée. Sa face arrière 111 (c'est-à-dire la face destinée à venir en contact avec le dossier du véhicule) est donc plus épaisse (et présente donc une surface plus importante) que la face 112 orientée vers l'avant.

Un premier avantage de cette approche est que l'on compense ainsi, au moins en partie, l'inclinaison du siège du véhicule, de façon que la partie supérieure 113 de l'embase s'étende sensiblement horizontalement.

La face arrière 111 porte, classiquement, des pinces Isofix 114, destinées à être solidarisées à des crochets complémentaires prévus à cet effet sur la plupart des véhicules.

Le fauteuil 12 du siège auto comprend un dossier 13 et une assise 14.

Comme on le voit sur ces figures, les éléments de fixation femelles 151 et 152 montés sous la face inférieure 141 de l'assise 14 sont distribués de façon à coopérer avec des éléments de fixation mâles complémentaires de l'embase 11 différents selon la position du fauteuil 12. Ainsi, l'élément de fixation mâle proche de la face arrière 111 de l'embase (non représenté), coopère avec l'élément femelle 151 dans la position face à la route (figure 1a), et avec l'élément de fixation femelle 152 dans la position dos à la route (figure 1b).

Par ailleurs, préférentiellement, ces différents éléments de fixation sont distribués de façon que :
- dans la position face à la route (figure 1a), la face arrière 131 du dossier 13 se trouve sensiblement dans le plan 16 défini par la face arrière 111 de l'embase. Ainsi, on dispose d'une surface sensiblement continue, et importante, venant en contact avec le dossier du véhicule ;
- dans la position dos à la route (figure 1b), l'extrémité 142 de l'assise vient également se placer sensiblement dans ce plan 16, toujours pour offrir une surface d'appui importante, combinant la face arrière 111 de l'embase et l'extrémité 142 de l'assise 14.

Ceci permet d'assurer une fonction anti-rebond du siège auto, suite à un choc, dû à un coup de frein brusque ou à un accident par exemple.

On notera que, dans certains modes de réalisation, le fauteuil 12 peut être inclinable, au moins dans l'une des positions. Dans ce cas, l'arrière du dossier 131 et/ou l'extrémité 142 de l'assise peuvent être conformés pour maximiser, dans toutes les positions d'inclinaison, la surface d'appui contre le dossier.

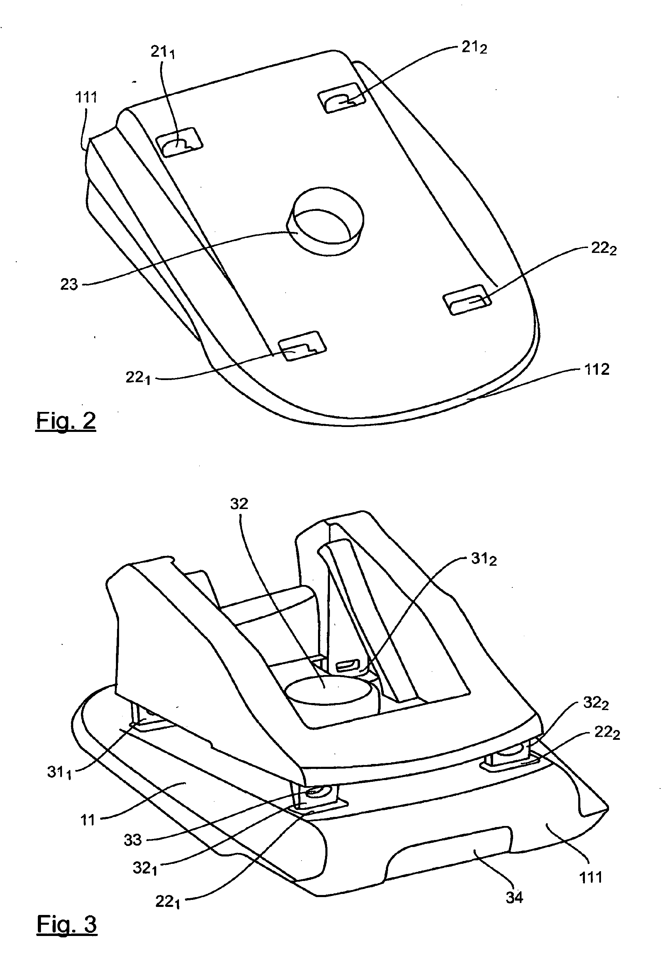

Comme on le voit sur la figure 2, qui présente un exemple d'embase 11, vue de dessus, la surface supérieure 113 de celle-ci présente quatre ouvertures, deux ouvertures 21₁ et 21₂, au voisinage de la face arrière 111, et deux ouvertures 22₁ et 22₂, au voisinage de la face avant 112. C'est par ces ouvertures que passeront les éléments de fixation solidaires du fauteuil, dans l'une ou l'autre des positions dos à la route ou face à la route (figure 3).

La partie supérieure 113 de l'embase présente également un élément central 23, sous forme d'une portion cylindrique centrale dans cet exemple, assurant une fonction de guidage et/ou d'aide au placement du fauteuil. Cet élément est optionnel, et non nécessaire pour la mise en oeuvre de l'invention dans ses différents modes de réalisation.

Cet élément central 23 est placé au centre du rectangle défini par les ouvertures 21₁, 21₂, 22₁ et 22₂. L'assise 14 est équipée d'une pièce centrale complémentaire 32 (que l'on distingue notamment sur la figure 3) réalisée d'un seul tenant ou non.

Cet élément central 23 permet de garantir que les éléments de fixation du fauteuil se trouvent bien en regard des ouvertures correspondantes, sans que l'utilisateur doive tâtonner pour trouver la bonne position. Il ne s'agit pas, cependant, d'un système à rotation tel que ceux déjà connus, puisque, comme cela apparaîtra plus clairement par la suite, l'utilisateur doit soulever le fauteuil, pour extraire les éléments de fixation femelles des ouvertures, puis déplacer le fauteuil dans la position souhaitée.

Dans certains cas, l'élément central 23 peut être un simple guide, ou détrompeur, sur lequel doit être tout d'abord placé le fauteuil, pour ensuite finaliser la mise en place. Dans ce cas, l'élément central 23 peut être tronconique.

Dans le mode de réalisation illustré sur la figure 2, il s'agit d'un élément cylindrique. On peut prévoir un moyen supplémentaire, empêchant la désolidarisation complète du fauteuil et de l'embase, par exemple, en équipant la partie supérieure de l'élément central 23 d'une collerette formant butée. Ceci peut permettre de faciliter les manipulations, et d'éviter une désolidarisation et une utilisation non souhaitable du fauteuil sans l'embase.

Sur la figure 3, on présente la mise en place du fauteuil sur l'embase 11. Pour faciliter la compréhension, on a représenté uniquement une portion 31 de la structure du fauteuil, permettant de visualiser les éléments de fixation.

La portion 31 de structure (et donc le fauteuil) est ici en cours d'installation, c'est-à-dire que la pièce centrale complémentaire 32 assure, en combinaison avec l'élément central 23 de l'embase, le guidage et garantit que les éléments de fixation se trouvent en regard des ouvertures 21₁, 21₂, 22₁ et 22₂ de l'embase 11, mais la mise en place définitive n'est pas encore effectuée.

On distingue en effet les éléments de fixation femelles ou éléments d'accrochage s'étendant sous l'assise du fauteuil, respectivement 31₁, 31₂, 32₁ et 32₂. Dans ce mode de réalisation, il s'agit d'éléments femelles, s'étendant verticalement, et présentant une ouverture traversante 33. En d'autres termes, les éléments femelles forment dans cet exemple des logements, ou des anneaux, et les éléments mâles, formant dans cet exemple des doigts qui seront décrits par la suite peuvent s'introduire dans ces logements, pour les traverser, dans les deux sens.

Dans la position de la figure 3, l'utilisateur soutient le fauteuil, qui a donc été légèrement soulevé, en suivant le guidage imposé par l'élément central 23 et la pièce complémentaire 32. C'est dans cette position surélevée qu'il est possible de déplacer le fauteuil par rapport à l'embase, de la position dos à la route vers la position face à la route, et réciproquement.

Ensuite, l'utilisateur insère les éléments de fixation femelles 31₁, 31₂, 32₁ et 32₂ dans les ouvertures 21₁, 21₂, 22₁ et 22₂ correspondantes. Une fois cette insertion effectuée, le verrouillage définitif peut être effectué, à l'aide de la poignée 34 dans ce mode de réalisation, comme expliqué plus en détail par la suite.

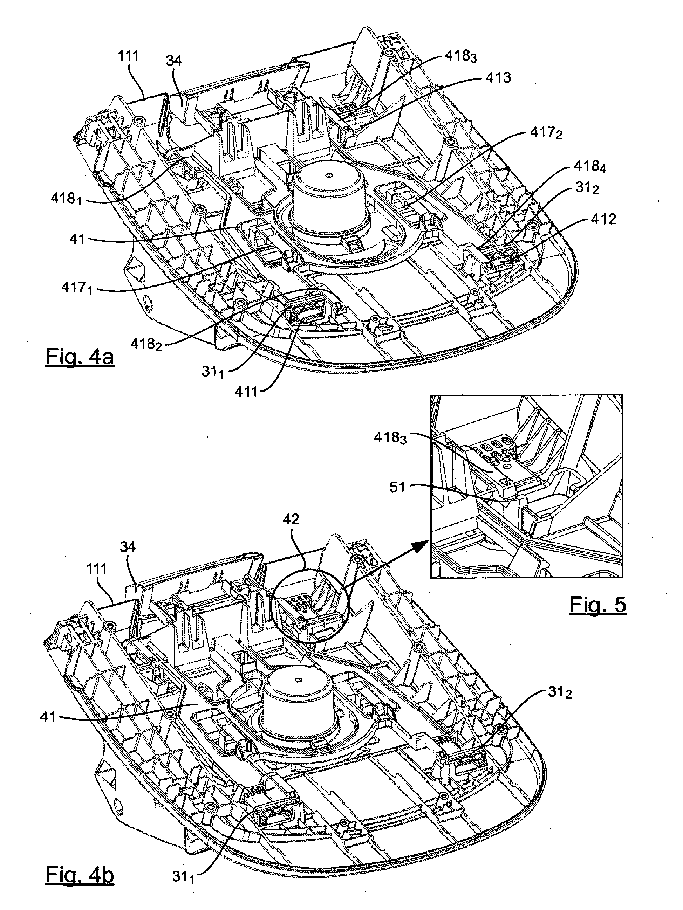

Les figures 4a et 4b illustrent l'intérieur de l'embase 11, et plus précisément une demi-coque supérieure de celle-ci, l'embase étant ensuite complétée par une demi-coque inférieure solidarisée à la demi-coque supérieure.

La face arrière 111 de l'embase présente donc une poignée 34, mobile entre une position verrouillée (figure 4a) dans laquelle elle est de préférence escamotée à l'intérieur de l'embase 11, et une position de déverrouillage (figure 4b), dans laquelle elle s'étend au-delà de la face arrière de l'embase.

Cette poignée 34 assure le déplacement en coulissement d'un ensemble 41 de verrouillage/déverrouillage comprenant notamment les quatre éléments de fixation mâles, ou doigts, 411, 412, 413 et 414 (le quatrième élément 414 est non visible sur ces figures).

Comme on le voit sur les figures 4a et 4b, les doigts « avant » 411 et 412 circulent, sous l'action de la poignée 34, dans les logements 31₁ et 31₂ liés à l'assise du siège (sur les figures 4a et 4b, le siège est donc présent sur l'embase). Des systèmes similaires sont prévus pour les doigts « arrière » 413 et 414.

Lorsque la poignée 34 est tirée, ou déplacée, vers l'arrière, (figure 4b), les doigts 411 à 414 sont décalés vers l'arrière, et sortis des logements correspondants, ce qui permet de soulever, puis déplacer, le fauteuil.

Dans le mode de réalisation illustré, des moyens spécifiques sont prévus, pour maintenir les éléments de fixation 411 à 414 dans la position déverrouillée, ou de libération, permettant le retrait puis l'insertion des éléments femelles de fixation du fauteuil.

Plus précisément, dans le mode de réalisation illustré, on prévoit deux premiers moyens de maintien dans la position de libération (ou déverrouillée), ou clips pré-mémoire, 417₁ et 417₂, actifs lorsque la poignée 34 est tirée, ou sortie, et que l'assise est soulevée mais que le fauteuil n'a pas encore été désolidarisé de l'embase.

On prévoit également des seconds moyens de maintien dans la position de libération, sous la forme de quatre clips mémoire 418₁ à 418₄, associés respectivement à chacun des doigts 411 à 414. La présence de quatre clips mémoire permet d'assurer que, lors du verrouillage, les quatre premiers éléments de fixation seront bien solidarisés avec les quatre seconds éléments de fixation.

Comme illustré sur la figure 5, qui est une vue partielle agrandie de la zone 42 de la figure 4b, le clip 418₃ prend appui sur une excroissance 51, lorsque la poignée est sortie (figure 4b) et que l'assise a été soulevée.

Le principe de fonctionnement de ces clips pré-mémoire et mémoire est expliqué plus en détail ci-après, au vu des figures en coupe simplifiée 6a à 6c.

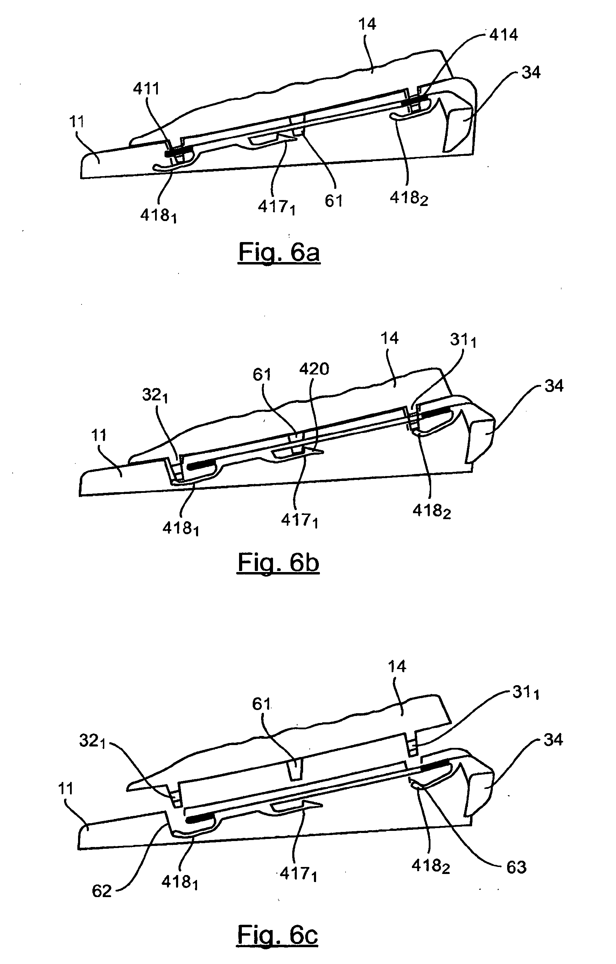

Sur ces figures 6a à 6c, on a représenté l'embase 11 et la partie inférieure de l'assise 14 (ou d'un plateau supportant cette assise, selon les modes de réalisation).

Sur la figure 6a, le système est en position verrouillée, et les moyens de maintien en position de libération, ou de mémoire, sont inactifs. La poignée 34 est rentrée à l'intérieur de l'embase.

Le fauteuil est donc solidarisé à l'embase, par l'intermédiaire des premiers éléments de fixation, ou doigts de verrouillage, 411 et 414. Les clips de pré-mémoire 417₁ et 417₂ et les clips de mémoire 418₁ et 418₂ sont inactifs, et leurs extrémités s'étendent dans le vide.

Lorsque l'on tire la poignée 34, pour passer dans la position déverrouillée, comme illustré sur la figure 6b, le clip de pré-mémoire 417₁ vient prendre appui sur une butée 61 solidaire de l'assise 14. L'extrémité 420 du clip de pré-mémoire 417₁ est adaptée pour s'opposer au retour de la poignée 34 et donc pour s'opposer au retour des différents éléments auxquels elle est liée, dans la position verrouillée.

Dans le même temps, les clips de mémoire 418₁ et 418₂ viennent prendre appui, et sont donc en contrainte, sur les seconds éléments de fixation 31₁ et 32₁. Ils sont cependant inactifs tant que le fauteuil n'a pas été soulevé, et donc que les logements des doigts de verrouillage sont toujours à l'intérieur de l'embase.

Lorsque l'on soulève le fauteuil, on se trouve dans la position illustrée par la figure 6c, dans laquelle le clip de pré-mémoire 417₁ devient inactif, puisqu'il n'est plus en contact avec la butée 61. Les clips de mémoire 418₁ et 418₂ deviennent alors actifs, en venant en contrainte sur des épaulements 62 et 63 prévus à cet effet dans l'embase. La figure 5 illustre plus précisément un exemple d'un tel épaulement, sous la forme de l'excroissance 51.

Le déverrouillage de ces clips mémoire 418₁ à 418₄ se produira lorsque le fauteuil sera remis en place sur l'embase, et que les seconds éléments de fixation 31₁, 32₁ seront réintroduits dans l'embase. Ceux-ci repoussent les clips de mémoire 418₁ à 418₄, qui ne sont alors plus en appui contre les épaulements 62 et 63. Les clips de mémoire et les clips de pré-mémoire glissent vers l'avant de l'embase, par exemple sous l'effet d'un ressort. De plus, la forme de l'extrémité 420, sur laquelle vient en appui la butée 61, peut participer à ce mouvement de glisse vers l'avant des clips de mémoire et de pré-mémoire. De cette manière, on revient à la position verrouillée de la figure 6A sans avoir besoin de pousser la poignée 34. Dans un mode de réalisation, on pourrait toutefois envisager de devoir également pousser la poignée.

Il est alors possible d'assurer le verrouillage, en poussant la poignée 34, de façon à dégager l'extrémité 420 du clip de pré-mémoire 417₁ de la butée 61, pour reprendre la position verrouillée de la figure 6a.

## Revendications

1. Siège auto (1) pour enfant, comprenant :
- une embase (11), apte à être solidarisée au siège d'un véhicule dans une position d'installation unique, et
- un fauteuil (12), comprenant une assise (14) et un dossier (13), et pouvant prendre au moins deux positions par rapport à ladite embase (11), une position face à la route et une position dos à la route,
ladite embase (11) présentant une section biseautée, et comprenant une face arrière (111), prévue pour venir en contact avec le dossier du siège du véhicule et définissant un plan d'appui, et une face avant (112), la surface de ladite face arrière (111) étant supérieure à la surface de ladite face avant (112), ledit dossier du siège auto s'étendant dans le prolongement dudit plan d'appui, lorsque ledit siège auto est dans la position face à la route, et l'extrémité de ladite assise venant dans ledit plan d'appui, lorsque ledit siège auto est dans la position dos à la route, **caractérisé en ce que** ladite embase (11) présente au moins quatre premiers éléments de fixation, comprenant une première paire et une seconde paire de premiers éléments de fixation, aptes à coopérer avec au moins quatre seconds éléments complémentaires prévus sous l'assise dudit fauteuil, comprenant une première paire et une seconde paire de seconds éléments de fixation,
lesdits premiers et seconds éléments de fixation étant distribués symétriquement de façon que :
- dans ladite position face à la route, la première paire de premiers éléments de fixation coopère avec la première paire de seconds éléments de fixation, et la seconde paire de premiers éléments de fixation coopère avec la seconde paire de seconds éléments de fixation ;
- dans ladite position dos à la route, la première paire de premiers éléments de fixation coopère avec la seconde paire de seconds éléments de fixation, et la seconde paire de premiers éléments de fixation coopère avec la première paire de seconds éléments de fixation.

2. Siège auto selon la revendication 1, **caractérisé en ce que** lesdits premiers éléments de fixation sont des éléments mâles mobiles (411, 412, 413, 414), et **en ce que** lesdits seconds éléments de fixation (31₁, 31₂, 32₁, 32₂) présentent des ouvertures (33), avec lesquelles lesdits éléments mâles (411, 412, 413, 414) peuvent coopérer selon deux sens d'introduction, correspondant respectivement à la position face à la route et à la position dos à la route.

3. Siège auto selon l'une quelconque des revendications 1 et 2, **caractérisé en ce que** ladite face arrière (111) présente une hauteur supérieure à 10 cm, assurant au moins en partie une fonction anti-rebond lorsque ledit siège auto est dans la position dos à la route.

4. Siège auto selon l'une quelconque des revendications 1 à 3, **caractérisé en ce que** ladite embase (11) comprend un élément central (23) de guidage et/ou d'aide au placement dudit fauteuil (12) dans l'une ou l'autre desdites positions dos à la route ou face à la route.

5. Siège auto selon la revendication 4, **caractérisé en ce que** ledit fauteuil (12) peut se déplacer sur une hauteur prédéterminée selon l'axe dudit élément central (23), pour passer d'une position basse de verrouillage à une position haute de rotation du fauteuil (12), pour passer de l'une à l'autre desdites positions dos à la route ou face à la route.

6. Siège auto selon l'une quelconque des revendications 1 à 5, **caractérisé en ce qu'**il comprend des moyens uniques d'actionnement desdits éléments de fixation.

7. Siège auto selon la revendication 6, **caractérisé en ce que** lesdits moyens d'actionnement comprennent une poignée (34) contrôlant le déplacement en coulissement de l'ensemble desdits premiers éléments de fixation.

8. Siège auto selon la revendication 7, **caractérisé en ce que** ladite poignée (34) coopère avec des premiers moyens de maintien (417₁, 417₂) dans une position de libération desdits premiers éléments de fixation, lorsque ladite poignée (34) est dans une position de déverrouillage et que ledit fauteuil (12) est en place sur ladite embase (11).

9. Siège auto selon l'une quelconque des revendications 7 et 8, **caractérisé en ce que** ladite poignée (34) coopère avec des seconds moyens de maintien (418₁, 418₂, 418₃, 418₄) dans une position de libération desdits premiers éléments de fixation, lorsque ladite poignée (34) est dans une position de déverrouillage et que ledit fauteuil (12) est éloigné de ladite embase (11).

## Patentansprüche

1. Autokindersitz (1), der folgendes umfasst:
- einen Sockelteil (11), der mit einem Kraftfahrzeugsitz in einer einzigen Installationsposition verbunden werden kann und,
- einen Sessel (12), der einen Sitz (14) und eine Rücklehne (13) aufweist und mindestens zwei Positionen im Verhältnis zum besagten Sockelteil (11) einnehmen kann, eine Position in Fahrtrichtung und eine Position gegen die Fahrtrichtung,
wobei der besagte Sockelteil (11) einen abgeschrägten Abschnitt hat sowie eine rückwärtige Fläche (111) aufweist, die mit der Rücklehne des Fahrzeugsitzes in Kontakt kommt und eine Stützfläche festlegt, sowie eine vordere Fläche (112), wobei die Oberfläche der besagten rückwärtigen Fläche (111) größer als die der besagten vorderen Fläche (112) ist, wobei die besagte Rücklehne des Autokindersitzes in der Verlängerung der besagten Stützfläche liegt, wenn der besagte Autokindersitz in Fahrtrichtung befindet, und wobei sich das Ende des Sitzes in der besagten Stützfläche befindet, wenn der besagte Kindersitz gegen die Fahrtrichtung angebracht ist,
**dadurch gekennzeichnet, dass** der besagte Sockelteil (11) mindestens vier erste Befestigungselemente aufweist, die ein erstes Paar und ein zweites Paar erster Befestigungselemente aufweisen, die in der Lage sind, mit mindestens vier zweiten ergänzenden Befestigungselementen zusammenzuwirken, die unter dem Sockelteil des besagten Autokindersitzes angebracht sind, die ein erstes Paar und ein zweites Paar zweiter Befestigungselemente aufweisen,
wobei das jeweils besagte erste und zweite Befestigungselement symmetrisch derart verteilt sind, dass:
- in der besagten Position in Fahrtrichtung, das erste Paar erster Befestigungselemente mit dem ersten Paar zweiter Befestigungselemente zusammenwirkt, während das zweite Paar erster Befestigungselemente mit dem zweiten Paar zweiter Befestigungselemente zusammenwirkt;
- in der besagten Position gegen die Fahrtrichtung, das erste Paar erster Befestigungselemente mit dem zweiten Paar zweiter Befestigungselemente zusammenwirkt, während das zweite Paar erster Befestigungselemente mit dem ersten Paar zweiter Befestigungselemente zusammenwirkt.

2. Autokindersitz nach Anspruch 1, **dadurch gekennzeichnet, dass** die ersten Befestigungselemente bewegliche männliche Elemente (411, 412, 413, 414) sind und, dass die besagten zweiten Befestigungselemente (31₁, 31₂, 32₁, 32₂) Öffnungen (33) aufweisen, mit denen die besagten männliche Elemente (411, 412, 413, 414) in zwei Einführungsrichtungen zusammenwirken können, welche jeweils der Position in Fahrtrichtung bzw. der Position gegen die Fahrtrichtung entsprechen.

3. Autokindersitz nach einem der Ansprüche 1 oder 2, **dadurch gekennzeichnet, dass** die Höhe der besagten rückwärtigen Fläche (111) um etwa 10 cm höher ist, so dass sie zumindest teilweise eine Funktion gegen das Rückprallen ausübt, wenn das besagte Autokindersitz gegen die Fahrtrichtung angebracht ist.

4. Autokindersitz nach einem der Ansprüche 1 bis 3, **dadurch gekennzeichnet, dass** der besagte Sockelteil (11) ein mittleres Element (23) zum Führen und/oder zum Helfen beim Anbringen des besagten Sessels (12) in einer der besagten Positionen, in Fahrtrichtung oder gegen der Fahrtrichtung, aufweist.

5. Autokindersitz nach Anspruch 4, **dadurch gekennzeichnet, dass** der besagte Sessel (12) über eine vorgegebene Höhe entlang der Achse des besagten mittleren Elementes (23) bewegt werden kann, um von einer tiefen Verriegelungsposition in eine hohe Position zum Drehen des Sessels (12) überzugehen, um von einer der besagten Positionen in die andere Position, in Fahrtrichtung oder gegen die Fahrtrichtung, überführt zu werden.

6. Autokindersitz nach einem der Ansprüche 1 bis 5, **dadurch gekennzeichnet, dass** er über einzelne Mittel zum Betätigen der besagten Befestigungselemente verfügt.

7. Autokindersitz nach Anspruch 6, **dadurch gekennzeichnet, dass** die besagten Mittel zum Betätigen einen Griff (34) aufweisen, der das Verschieben der Gruppe der besagten ersten Befestigungselemente steuert.

8. Autokindersitz nach Anspruch 7, **dadurch gekennzeichnet, dass** der besagte Griff (34) mit ersten Haltemitteln (4171, 4172) in einer Position zum Freigeben der besagten ersten Befestigungselemente zusammenwirkt, wenn der besagte Griff (34) sich in einer ersten Entriegelungsposition befindet und der besagte Sessel (12) auf dem besagten Sockelteil (11) angebracht ist.

9. Autokindersitz nach einem der Ansprüche 7 oder 8, **dadurch gekennzeichnet, dass** der besagte Griff (34) mit zweiten Mitteln (418₁, 418₂, 418₃, 418₄) zum Halten in einer Position der Freigabe der besagten ersten Befestigungsmittel zusammenwirkt, wenn der besagte Griff (34) sich in einer Entriegelungsposition befindet und wenn der besagte Sessel (12) von dem besagten Sockelteil (11) entfernt wird.

## Claims

1. Car seat (1) for a child, comprising:
- a base (11) which is capable of being secured to the seat of a vehicle in a single position of installation, and
- a chair (12) which comprises a seating surface (14) and a backrest (13) and is capable of assuming at least two positions in relation to said base (11): a position facing the road and a position with the back to the road;
said base (11) having a bevelled section and comprising a rear face (111), which is intended to come into contact with the backrest of the vehicle seat and defines a bearing plane, and a front face (112), the surface area of said rear face (111) being greater than the surface area of said front face (112), said backrest of the car seat extending in the prolongation of the bearing plane when said car seat is in the position facing the road, and the end of said seating surface coming into said bearing plane when said car seat is in the position with the back to the road,
**characterised in that** said base (11) has at least four first fastening elements, comprising a first pair and a second pair of first fastening elements, which are capable of cooperating with at least four second complementary elements which are provided under the seating surface of said chair and comprise a first pair and a second pair of second fastening elements, said first and second fastening elements being distributed symmetrically in such a way that:
- in said position facing the road, the first pair of first fastening elements cooperates with the first pair of second fastening elements, and the second pair of first fastening elements cooperates with the second pair of second fastening elements;
- in said position with the back to the road, the first pair of first fastening elements cooperates with the second pair of second fastening elements, and the second pair of first fastening elements cooperates with the first pair of second fastening elements.

2. Car seat according to Claim 1, **characterised in that** said first fastening elements are movable male elements (411, 412, 413, 414), and **in that** said second fastening elements (31₁, 31₂, 32₁, 32₂) have apertures (33) with which said male elements (411, 412, 413, 414) are able to cooperate in two directions of introduction which correspond, respectively, to the position facing the road and to the position with the back to the road.

3. Car seat according to either of Claims 1 and 2, **characterised in that** said rear face (111) has a height greater than 10 cm, at least partially performing an anti-rebound function when said car seat is in the position with the back to the road.

4. Car seat according to any of Claims 1 to 3, **characterised in that** said base (11) comprises a central element (23) for guiding and/or assisting the placing of said chair (12) in one or other of said back-to-the-road or facing-the-road positions.

5. Car seat according to Claim 4, **characterised in that** said chair (12) is capable of being displaced over a predetermined height along the axis of said central element (23), in order to change from a low locking position to a high position for rotating the chair (12), in order to change from one to the other of said back-to-the-road or facing-the-road positions.

6. Car seat according to any of Claims 1 to 5, **characterised in that** it comprises single means for actuating said fastening elements.

7. Car seat according to Claim 6, **characterised in that** said actuating means comprise a handle (34) which controls the displacement, in sliding motion, of all of said first fastening elements.

8. Car seat according to Claim 7, **characterised in that** said handle (34) cooperates with first retention means (417₁, 417₂) in a position for releasing said first fastening elements, when said handle (34) is in an unlocking position and when said chair (12) is in place on said base (11).

9. Car seat according to either of Claims 7 and 8, **characterised in that** said handle (34) cooperates with second retaining means (4181, 4182, 4183, 4184) in a position for releasing said first fastening elements, when said handle (34) is in an unlocking position and when said chair (12) is moved away from said base (11).
